# EUROPÄISCHE PATENTSCHRIFT

(11) **EP 1 430 995 B1**
(45) Veröffentlichungstag und Bekanntmachung des Hinweises auf die Patenterteilung: **02.08.2006**
(21) Anmeldenummer: 03028879.9
(22) Anmeldetag: 16.12.2003
(51) Int. Cl.: B23Q 17/24, G01B 11/27, G01B 21/24

(54) **Vorrichtung zur quantitativen Beurteilung der Orientierung zweier Maschinen relativ zueinander**
Apparatus for the determination of the relative orientation of two machines
Appareil pour la détermination quantitative de l'orientation relative de deux machines

(30) Priorität: 19.12.2002 DE 10260099
(43) Veröffentlichungstag der Anmeldung: 23.06.2004
(73) Patentinhaber: Prüftechnik Dieter Busch AG, 85737 Ismaning (DE)
(72) Erfinder: Lacko, Dragutin, 2900 Schoten (BE); Locoge, Pascal, 85435 Erding (DE)

(56) Entgegenhaltungen:
- DE-A- 19 907 880
- US-A- 4 518 855
- US-A- 4 698 491
- US-A- 5 026 998
- US-A- 5 621 655
- US-A- 6 040 903
- US-B1- 6 411 375
- EICKHOFF P: "Einrichten mit dem Laser" LASER PRAXIS, CARL HANSER VERLAG, MUENCHEN, DE, 1. September 1993 (1993-09-01), Seiten LS89-LS90, XP000394218 ISSN: 0937-7069

## Beschreibung

Die Erfindung bezieht sich auf eine Vorrichtung nach dem Oberbegriff des Anspruchs 1.

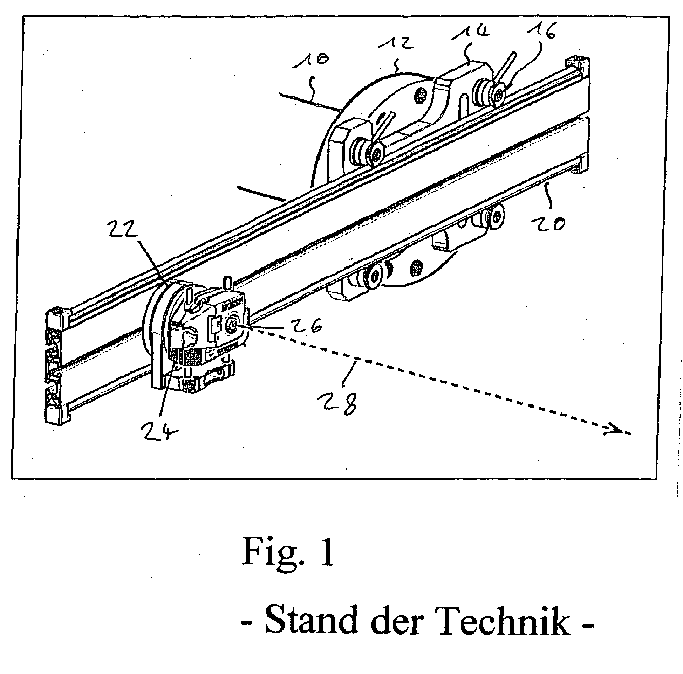

Eine Vorrichtung dieser Art ist bekannt und wird in Fig. 1 dargestellt. Diese erfordert jedoch ein präzises und vergleichsweise kostenintensives Drehgelenk 22, um eine Einrichtung 24 zum Senden und zum Empfang eines Meß-Lichtstrahles 28 beabstandet von einer zu vermessenden, Maschinenwelle 10 zu haltern. Hierzu wird beispielsweise zusätzlich eine Extender-Schiene 20 und Klemmvorrichtungen 16 verwendet.

Es ist Aufgabe der Erfindung, eine gattungsgemässe Vorrichtung zu schaffen, welche deutlich kostengünstiger ist und keine Einbuße an Bedienungskomfort verursacht. Diese Aufgabe wird mit den Mitteln gelöst, wie sie in den unabhängigen Ansprüchen dargestellt sind.

Die Erfindung beruht auf der Erkenntnis, daß es in der Praxis so gut wie nie erforderlich ist, einen parallelen Achsversatz von solchen Maschinen zu bestimmen, die konstruktionsgemäß mit einer Kardanwelle mit zwei Kardangelenken (engl. "universal joint" ) verbunden sind. Die Kardanwelle wird ja zumeist vorgesehen, wenn ein solcher paralleler Achsversatz prinzipiell vorhanden ist und seine absolute Größe unkritisch ist. Aus Gründen der Drehkinematik ist es aber besonders wichtig, daß die Achsen der Wellen der so miteinander gekoppelten Maschinen weitestgehend parallel sind, um auch geringfügigste Variationen von Winkelbeschleunigungen an den rotierenden Maschinenelementen zu vermeiden. Dementsprechend ist es gemäß der Erfindung nicht erforderlich, ein Meßsystem bereitzustellen, welches gleichzeitig Parallel- und Winkelversatz von Wellen erfassen kann. Vielmehr genügt es, ein Meßsystem bereitzustellen, welches lediglich in präziser Weise den Winkelversatz solcher Wellen erfassen kann. Unter Berücksichtigung einiger geometrischer Randbedingungen und Zusammenhänge ist es damit möglich, eine Meß-Vorrichtung zu schaffen und ein Verfahren anzugeben, bei der auf ein herkömmliches Meß-Drehgelenk vollständig verzichtet werden kann. Es kann gemäß der Erfindung nämlich aus erfaßbaren Versatzmaßen, welche in unterschiedlichen Drehlagen der zu vermessenden Wellen mittels herkömmlicher Sensoren erfaßt werden, aufgrund einfacher Formeln auf die angulare Fehlausrichtung dieser Wellen und der zugehörigen Maschinen geschlossen werden.

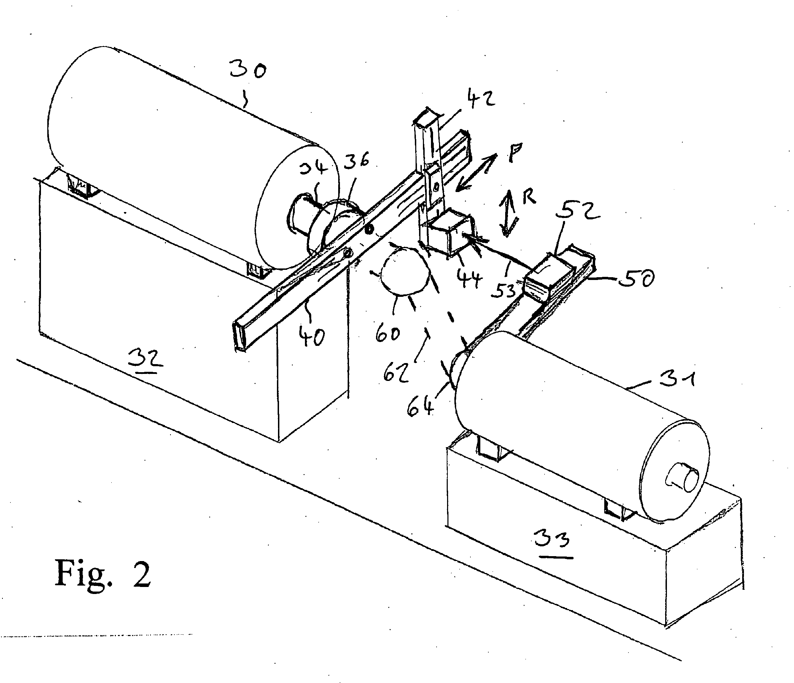

Einzelheiten der Erfindung werden in Fig. 2 gezeigt, wobei eine zugehörige Kardanwelle 62 und zugehörige Kardangelenke 60, 64 als für die Messung bereits entfernt angenommen wird und daher nur gestrichelt und schematisch angedeutet ist. Wie aus der Figur ersichtlich, mögen die Maschinen 30, 31 auf unterschiedlich hohen Sockeln 32, 33 stehen und somit einen Parallelversatz ihrer Wellen aufweisen. Der Extender 40 kann in herkömmlicher Weise oder mittels Schrauben am Kupplungsträger 36 befestigt sein und einen Zusatz-Extender 42 tragen, was jedoch optional ist. In jedem Falle ist entweder ein Lichtsender und/oder Empfänger an entweder dem Extender 40 direkt oder vermittels des Zusatz-Extenders 42 angebracht, im gezeigten Beispiel wird ein Empfangsmodul 44 gemäß an sich bekanntem Stand der Technik dargestellt. In der gezeigten Meßposition, die auch als "3-Uhr-Position" bezeichnet wird, kann das Empfangsmodul den Auftrittsort eines einfallenden Lichtstrahls 53 bestimmen, welcher von einem Lichtsender 52 emittiert wird. Der Lichtsender 52 ist auf einem zweiten Extender, oder einer Haltevorrichtung 50 angebracht, welche ebenfalls an einen zugehörigen Kupplungsträger der Maschine 31 angebracht ist. Die Messung wird dabei so durchgeführt, daß das Empfangsmodul in einer Arbeitsweise in an sich bekannter Art betrieben wird, daß es vermittels zweier lichtempfindlicher Ebenen die Einfallsrichtung eines einfallenden Lichtstrahls zu bestimmen gestattet.

Gemäß einer Ausfürungsform der Erfindung ist es am einfachsten, zur Bestimmung der interessierenden Meßgrößen die Extender um 180° zu verdrehen (also beispielsweise die "9-Uhr-Position" einzustellen), das entsprechende Modul 44 so zu verschieben, daß es auch in dieser Position vom Lichtstrahl 53 getroffen werden kann und in dieser Position eine zusätzliche Messung mit Hilfe des Lichtsenders und des Empfangsmoduls durchzuführen. (Sofern die Funktionen des Lichtsenders und des Empfangsmodules in einem einzigen Gehäuse kombiniert sind, ist es gemäß der Erfindung auch möglich, eine solche Kombination im Zusammenspiel mit einem Planspiegel, insbesondere einem großflächigen Planspiegel, vorzusehen). Die zwei lichtempfindlichen Ebenen des Empfangsmodules sehen in dieser Position somit eine Einfallsrichtung des Lichtstrahles, welche bei nicht parallel ausgerichteten Maschinen 30, 31 sich von der Einfallsrichtung in der "3-Uhr"-Position unterscheidet, und zwar nach zwei erfaßbaren Winkelkoordinaten. Es werden also nur die jeweiligen Einfallsrichtungen vermessen, und die Position des auftreffenden Lichtstrahles ist gemäß der Erfindung von untergeordneter Bedeutung. Aus diesem Grund ist es also auch möglich und unkritisch, ein Lichtempfangs- oder Sendemodul (44, ggf. 52 oder beide gleichzeitig) relativ zueinander auf dem bzw. den Extendern zu verschieben und dann für eine Einzelmessung zu auf diesem kurzzeitig zu fixieren.

Die Erfindung kommt im Prinzip ohne den Zusatz-Extender 42 aus, sofern Meßpositionen eingestellt werden können, welche ca. 180° verschwenkt auseinanderliegen. Ist dies nicht der Fall, so ist der Zusatz-Extender 42 zu verwenden, und statt einfach strukturierter Bestimmungsgleichungen zur Ermittlung der Relativlage der Maschinen sind dann solche heranzuziehen, welche die entsprechenden Projektionen (also Sinus- und Cosinus-Anteile) des von 180° verschiedenen Drehwinkels der Extender berücksichtigen.

In einer weiteren vorteilhaften Ausgestaltung der Erfindung ist es vorgesehen, die Extender 40 und/oder 50 in einer solchen Weise mit Ausgleichsgewichten (nicht gezeigt) zu bestücken, daß die auf die Wellen oder Befestigungen ausgeübten Drehmomente möglichst gering gehalten werden. Auf diese Weise kann - insbesondere bei leichtgängigen Wellen - das Erfassen der Meßwerte erleichtert werden.

## Patentansprüche

1. Vorrichtung mit einer ersten Maschine (30) und einer zweiten Maschine (31) und mit einer beide Maschinen verbindenden Kardanwelle (62) mit zwei Kardangelenken (60, 64) und mit einer Vorrichtung zum Parallelausrichten der gennanten Maschinen mit mindestens einem an die Welle der ersten Maschine (30) befestigten Extender (20, 40), auf welchem Haltevorrichtungen für einen Lichtsender (26, 52) und/oder einen Lichtempfänger (44) angebracht sind,
**dadurch gekennzeichnet, daß** an die Welle der zweiten Maschine (31) ein weiterer Extender (50) angebracht ist, auf welchem der genannte Lichtsender (52) montiert ist,
so daß eine meßdrehgelenklose Halte- und Meßvorrichtung bereitgestellt wird, welche in zwei unterschiedlichen Drehlagen der Maschinenwellen (34) einen Lichtstrahl (53) vom Lichtsender (52) auf den Lichtempfänger (44) richtet so daß aus den vom Lichtempfänger (44) in den zwei unterschiedlichen Drehlagen gemessenen Einfallsrichtungen des Lichtstrahls (53) die winkelmäßige Fehlausrichtung der beiden Maschinen (30,31) ermittelt wird.

## Claims

1. Apparatus comprising a first machine (30) and a second machine (31) and comprising a Cardan shaft (62) having two universal joints (60, 64), which Cardan shaft connects the two machines, and comprising a device for the parallel alignment of the said machines,
comprising at least one extender (20, 40) which is fastened to the shaft of the first machine (30) and on which holding devices for a light transmitter (26, 52) and/or a light receiver (44) are fitted,
**characterized in that** attached to the shaft of the second machine (31) is a further extender (50), on which the said light transmitter (52) is mounted, so that a holding and measuring device devoid of rotary joint is provided, which, in two different rotary positions of the machine shafts (34), directs a light beam (53) from the light transmitter (52) to the light receiver (44), so that from the directions of incidence of the light beam (53), measured from the light receiver (44) in the two different rotary positions, the angular misalignment of the two machines (30, 31) is determined.

## Revendications

1. Dispositif comprenant une première machine (30) et une deuxième machine (31) et comprenant un arbre à cardan (62) reliant les deux machines, avec deux joints de cardan (60, 64) et un dispositif pour l'orientation en parallèle desdites machines avec au moins un prolongateur (20, 40) fixé sur l'arbre de la première machine (30),
sur lequel sont montés des dispositifs de fixation pour un émetteur de lumière (26, 52) et/ou un récepteur de lumière (44),
**caractérisé en ce qu'**un prolongateur supplémentaire (50) est monté sur l'arbre de la deuxième machine (31), sur lequel ledit émetteur de lumière (52) est monté,
de sorte qu'un dispositif de maintien et de mesure sans articulation rotative multiple soit fourni,
lequel oriente dans deux positions de rotation différentes des arbres de la machine (34), un faisceau lumineux (53) de l'émetteur de lumière (52) au récepteur de lumière (44),
de sorte que l'erreur d'orientation angulaire des deux machines (30, 31) soit déterminée à partir des directions d'incidence du faisceau lumineux (53) mesurées par le récepteur de lumière (44) dans les deux positions de rotation différentes.
